Europäisches Patentamt

European Patent Office

Office européen des brevets

(19)

(11) Publication number: **0 442 690 A2**

# EUROPEAN PATENT APPLICATION

(12)

(21) Application number: 91301097.1

(51) Int. Cl.$^5$: **G06F 12/08**

(22) Date of filing: 12.02.91

(30) Priority: 13.02.90 US 479782

(43) Date of publication of application:
21.08.91 Bulletin 91/34

(84) Designated Contracting States:
DE FR GB

(71) Applicant: Hewlett-Packard Company
Mail Stop 20 B-O, 3000 Hanover Street
Palo Alto, California 94304 (US)

(72) Inventor: Hotchkiss, Thomas R.
1720 Kirkwood Drive =N27
Fort Collins, Colorado 80525 (US)
Inventor: Undy, Stephen R.
937 Bute Pass Drive
Fort Collins, Colorado 80526 (US)
Inventor: Halperin, Daniel Lee
4518 Bluefin Court
Fort Collins, Colorado 80525 (US)

(74) Representative: Colgan, Stephen James et al
CARPMAELS & RANSFORD 43 Bloomsbury
Square
London WC1A 2RA (GB)

(54) Data cache store buffer for high performance computer.

(57)    A data cache store buffer can be used to buffer stores between a CPU and its data cache to increase processor capability and reduce performance degradations caused by stores.

EP 0 442 690 A2

**FIG 1**

# DATA CACHE STORE BUFFER FOR HIGH PERFORMANCE COMPUTERS

## Background of the Invention

### 1. Field of the invention.

The present invention pertains generally to computers and the operation between a Central Processing Unit (CPU) and a data cache.

### 2. Description of the Background.

Computers have one or more logic processors. Processors perform some logic or arithmetical step on data supplied according to the specific command received and the sequence of the commands received. In order to communicate with other elements of the computer, like input and output devices, the processor must be able to perform read and write operations. Read operations are inputs into the processor to either command the processor to perform a certain function or to give the processor some data with which to perform a certain function. The processor can be connected to one or more elements which input commands or data into the processor. A typical element connected to the processor is a memory element. Some examples of memory elements are random access memory (RAM), read-only memory (ROM), optical disk, hard disk, and floppy disk. Typically, a computer has a main memory element in which it can read from and write to. Write operations are outputs from the processor which give other elements of the computer either a command to execute a certain function, pass on data, or request to store data for future operations either by the processor or by some other element of the computer. A store operation includes a write operation and a command where to write.

Often, a processor will access memory frequently in order to receive commands, process data, and store data so as to timely provide output for output devices or to utilize as close to the full capacity of the processor as possible. Many memory elements can not be accessed as fast as the processor is capable of using it, so a data cache is used which has faster accessibility. Usually, the data cache is smaller than the main memory in that it cannot store as much information, but it is faster, and more expensive, in providing and receiving information. Since the processor can store and load information from the data cache faster than main memory, the processor accesses the data cache first and stores and loads information using the data cache if the data cache is storing the appropriate block of information. As information is processed, the main memory is generally updated in one of two ways. One way is the write-through cache where the store information is written both in the cache and in main memory at the same time. The other way is the write-back cache or copy-back cache where the store information is written into cache first and the main memory is updated from the cache at later point. The write-back cache has advantages in that the processor doesn't have to wait for the main memory to be updated as in the write-through cache and also, there are block transfers from data cache to main memory so this cuts down on the traffic on the main memory bus. However, the disadvantage is that the data cache and the main memory are not always identical.

Write operations from a processor, microprocessor, or a Central Processing Unit (CPU) to a cache tend to be slower than read operations. In order to perform a write, a store command is given. The store command has two steps. The store command requires that a check first be done to see if there is a hit. A hit is when the data to be stored has a memory location in the cache. Since the cache cannot usually hold as many memory locations as in the main memory, there is a chance that the data to be stored may not be in the cache at that time. After the check is performed and a hit is made then the data is written into the cache. This multi-step store process usually requires two or more clock cycles of the processor. On the other hand, a read or load operation usually requires only one clock cycle. In typical situations, the time required to perform a store operation may be several times longer than the time required to perform a load operation. Therefore, traditionally either the basic cycle of the machine must be increased by making the clock cycle longer to accommodate the longer store time or else, store operations must cause interlocks (which stalls the pipeline) to any immediately following instructions which need to use the cache before the store operation has completed. Both of these alternatives result in lower performance.

## Summary of the Invention

The present invention overcomes the limitations of the prior art by providing a data cache buffer for a computer comprising a processing means for executing commands and performing operations on data, having an input for receiving information and an output for sending information, a buffer means having an input connected to the output of the processing means, the input for receiving information from the processing means, and for storing that information, and having an output, and a data cache means having an input connected to the buffer means output, for receiving information from the buffer means, and for storing that information.

The data cache store buffer is quite flexible ; it is applicable to direct mapped, set associative, or fully associative caches. Also, it is applicable to caches accessed with either real or virtual addresses. Finally, it is applicable to write back or write through caches.

This invention allows higher operating frequencies and minimizes performance degradations caused by stores. In many modern processors (especially RISC processors) the operating frequency is limited by the speed of read and write accesses to the caches. Typically, the caches are implemented using commercially available high speed RAMs. The data cache must be able to complete loads and stores interchangeably in a single cycle to avoid performance degradations. However, with commercial RAMs it is possible to complete a cache read faster than a cache write, so if both types of accesses complete in a single cycle, the operating frequency will be limited by the write access. By buffering the stores (Writes), more than one cycle can be used to complete the write, and the operating frequency will be higher since it will be limited by the faster read access.

The second benefit is reduced performance degradations due to stores. With the buffer, stores are executed with no penalty unless the buffer is full. Increasing the number of buffer entries will decrease degradations due to stores.

The invention is used to buffer stores between a CPU arid its cache, rather than between a processor and main memory. This allows the processor to operate at a significantly higher operating frequency in addition to reducing performance degradations due to stores.

## Brief Description of the Drawings

Figure 1 is a drawing of a processor using a data cache.

Figure 2 is the basic data cache Store Buffer organization.

Figure 3 illustrates one embodiment of the invention.

Figure 4 shows the buffer activites with respect to clock cycles.

## Detailed Description

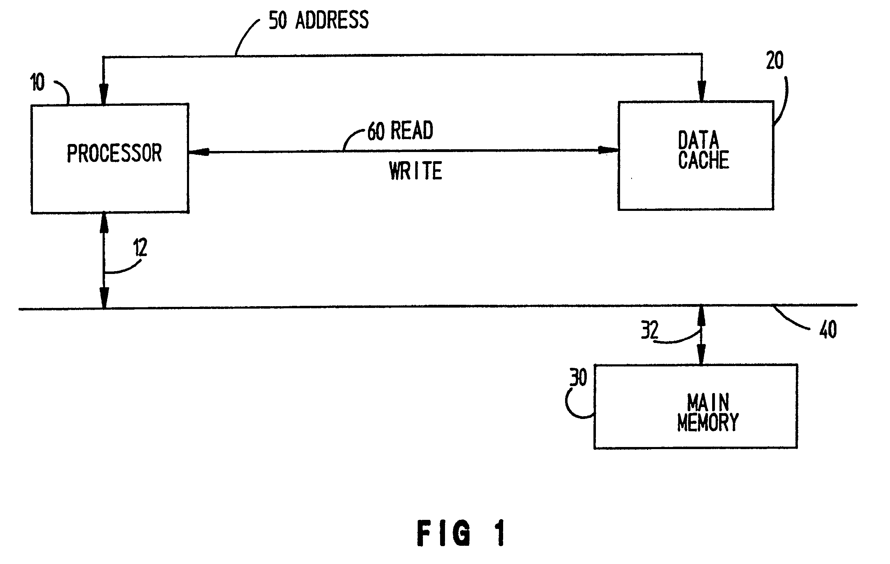

Figure 1 shows how a processor (10) uses a data cache (20). In order to reduce the time a processor waits for information from main memory (30), a data cache was put in to store the information the processor is most likely to use. The processor can read information from the data cache more quickly than from the main memory, so the processor doesn't wait as long between processing steps for information. Typically, the information stored in the data cache is a subset of information from the main memory. The subset is usually chosen as a group of information with addresses that surround the information the processor is currently using. For example, if the processor is currently using information stored at address C0000000 then the data cache may hold information stored at addresses B0000000 through D0000000. This is done this way because it is likely that the address of the information the processor will subsequently use will be close, to the address of the information the processor will use next so storing it in the data cache provides quick access without having to go back over the system bus (40) and access main memory. The processor checks the data cache when it needs more information to see if the address of the information is in the data cache. If the address is found the information stored at that address is either read into the processor or written over in the data cache. If the address is not found, then the processor via 12 goes over the system bus (40) to access main memory (30) via 32 and retrieves a block of information which includes the information stored at the specific address the processor needs and stores it in the data cache (20) via 60.

If data cache (20) is a write through cache then every time the processor writes to the cache the cache writes through to the main memory (30) via 12, 40, and 32. This is a simultaneous write to both the cache and the main memory. If data cache (20) is a write back cache, the processor only writes to the data cache and not main memory, if the address is found in the data cache via address line (50). When the processor requires information not stored in the data cache or when there is a convenient time to access the main memory without interrupting the processor, the main memory is updated by the data cache through the processor via 60, 12, 40, and 32. Although this design generally saves time, the disadvantage is that the data cache is not identical to the memory. Generally, this is not a problem since the processor always has access to the most recent information.

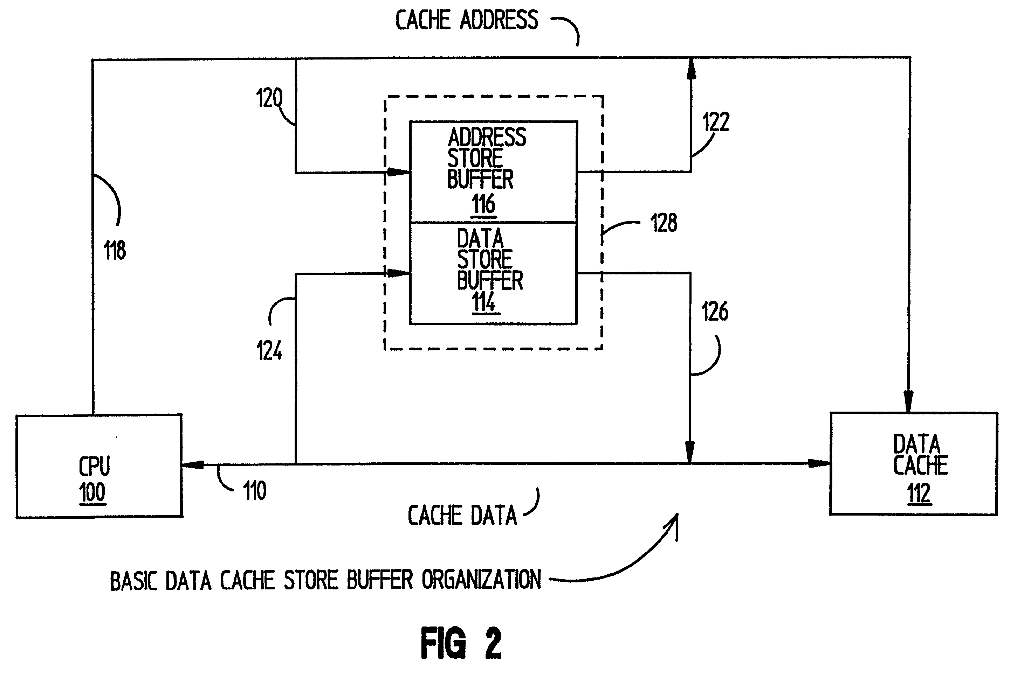

Figure 2 shows the basic components of a data cache store buffer using a central processing unit CPU (100). In an actual application, there are many different specific buffer implementations and the one selected will depend on the CPU and cache design.

The operation of the Data Cache Store Buffer is as follows :

1. When the CPU (100) executes a store instruction, the data cache (112) is accessed to check for a hit. If a cache hit occurs, the store data (110,124,114) and its address (118, 120, 116) are written into the store buffer (128), but the data cache (112) is not updated. Since this cache-check and buffer update occur in the same time required for a load, no extra time is required and thus performance is enhanced. Note that the buffer (128) holds a finite number of entries. If a store is executed when the buffer (128) is full, the CPU (100) must stall to empty one or more buffer entries. If a cache miss occurs, the CPU stalls to handle the miss. The miss is handled by having to transfer the appropriate block of information from main memory to the data cache as described in figure 1.

2. In most architectures, many of the CPU instructions do not access the data cache. With this invention, the CPU detects these non-data cache access instructions and empties the store buffer via (122, 126) in parallel with the execution of these instructions. One or more of these cycles may be needed to empty a buffer entry, depending on the CPU and cache design. Note that the buffer can also be emptied during stall cycles in which the data cache is not being accessed.

3. There may be times when there are the same addresses in the store buffer (128) and the data cache (112). This means the information at that address has been last written by the CPU into the store buffer (128). When the store buffer contains valid entries, some data in the cache may be invalid. When there is valid information in the store buffer, the corresponding data in the data cache is stale or outdated. Any operations which use data from the cache such as loads, stores and cache management instructions must interrogate via (118, 120) the address store buffer (116) to determine if the address for the data is also in the store buffer, if so, the data required by the instructions will be read via (126, 110) from the data store buffer (114) and not the data cache (112). Thus, when load instructions are executed the CPU must check the store buffer to determine if the buffer contains the data being addressed. This is performed by comparing the address of the load to the addresses of all the valid store buffer entries. If match occurs, then the CPU must use data from the store buffer rather than from the data cache. This should occur in approximately the same time required by a load operations so that there are no performance degradations due to loads. In a similar manner, the buffer contents must also be checked on a store operation. If the buffer contains data for the store being executed, then the new store data must replace the current store data in the buffer.

The Store Buffer design will depend on the type of data cache used. However, the Store Buffer can be used in many types of caches including, but not limited to, set associative caches, fully associative caches, and direct map caches. The set associative cache is when n units of data are associated with a given address. Generally, n = 1, 2, or 4. When n = 2, the cache is called a two-way set associative cache. A direct map cache is when n = 1, for a given address, one unit of data is obtained.

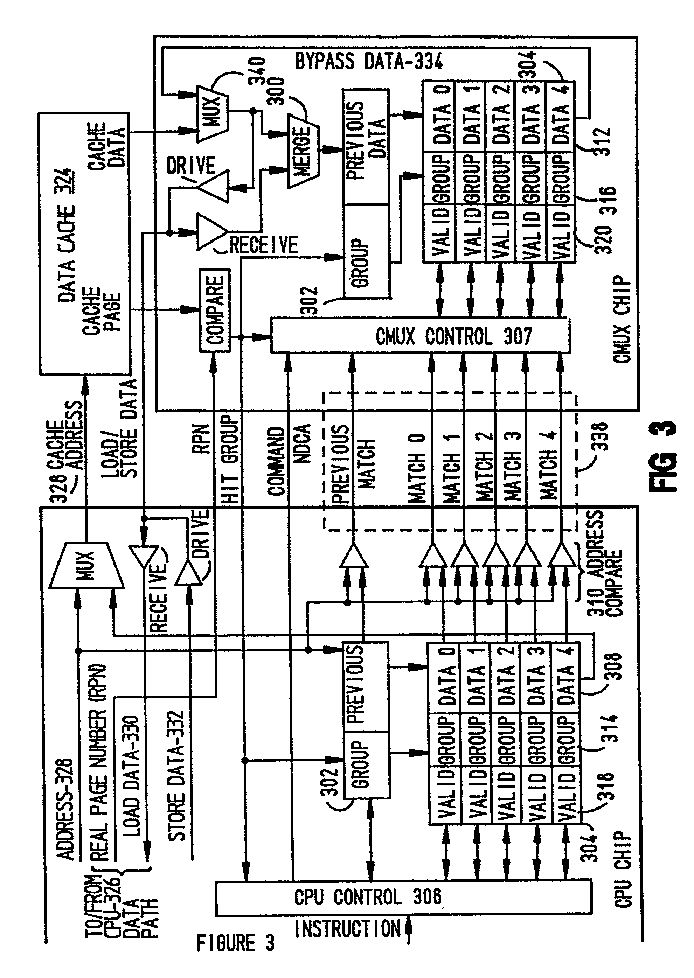

Figure 3 shows one embodiment. The Store Buffer consists of a data merge unit (300), a previous entry (302), five numbered entries (304), and control circuitry (306). In this case, the data cache is a double word-two way set associative cache. Each of the 6 entries (302, 304) consist of a double word of data (312), a double word cache address (308), and an address comparator (310). In addition, the numbered entries also include a group indicator (314,316) and a valid bit (318, 320). The merge unit (300) combines the new data to be stored with the double word previously at the target location in the cache since the execution unit may store data items smaller than a double word. Stores are performed by a read-modify-write operation. The data is read from the target cache location, the new data is used to modify the read data, and the result is written back via (322) to the cache RAMs (324). The Store Buffer allows the read-modify portion of the store to be separated in time from the write portion of the operation.

In this embodiment, the Store Buffer is part of the processor pipeline via (326). The pipeline is designed so that a new load via (330) or store via (332) can start every cycle. The Store Buffer (128) is involved in two stages of the processor pipeline but actually takes three states to perform a store. The first state occurs when the first pipeline stage executes while the second two states occur when the second pipeline state executes. During the first cycle, an address is issued via (328) to the cache RAMs. During the second cycle, the requested data is returned along with a hit and parity error indication. For a store operation, the data returned from the cache RAMs (324) is merged with the store data and it is entered into the Store Buffer previous entry (302). The address is entered as being the Store Buffer previous entry (302) via the address bus (328). During the third cycle of a store, the data and address stored in the previous entry along with its address and group indication is stored in a numbered entry (304). The entry is validated if the access hits in the cache, no trap occurs, and no parity error is detected. Otherwise, the entry remains invalid.

Valid data that is stored in the Store Buffer implies that the corresponding data in the cache is stale. Because data in the cache may be stale, every access of the cache must simultaneously interrogate the Store Buffer to determine if the data is also in the Store Buffer. If the data is present in the Store Buffer, it must be used instead of the stale data from the cache. In this case, the data is said to be bypassed (334) from the Store Buffer. The address comparators (310) are used to detect bypasses whether a bypass should occur. On every cache access along the address line (328), the cache address is sent to the comparators (310) as well as to the RAM address (336) in the cache (324). This address is then compared with the 6 addresses (308) stored in the Store Buffer. For the numbered entries, the entry matches if the entry is valid, the access results in a hit, the group indication matches the group that caused the hit, and the address in the entry matches the current address. The previous entry matches if the previous entry results in a hit, the group for both access are the same, and the previous entry matches the current address. If there is a match with a Store Buffer entry, then the data from that entry is used as if it were read directly from the cache rams. When there is a match, a Match signal is sent out along the specific Match line (338) which matched to the Data (312). The Data (312) is sent along the Bypass Data line (334) to the multiplexer Mux (340). For bypass loads (330), the data used by the CPU will come from the Store Buffer via (334) rather than from the cache via (342). On bypass stores, the data to be merged with the CPU store data (332) will come from the Store Buffer via the Mux (340) and the Bypass Data line (334). This bypassing operation, and the Store Buffer in general, has been implemented in hardware and done automatically, completely invisible to code.

The design of the cache requires two cycles to perform the write portion of the read-modify-write operation. The execution unit detects instructions that do not access the data cache (324). When at least one of the numbered Store Buffer entries (304) is valid and such an instruction is detected, a write operation begins. If the immediately following instruction also does not access the cache, the write operation completes and the entry is removed from the Store Buffer. Otherwise, the write operation is aborted and the entry remains in the Store Buffer.

The Store Buffer uses priority encoders to determine which numbered entry to use for the next update operation and which entry to use for the next write operation. The first priority encoder used for entering stores into the Store Buffer points to the lowest numbered entry which was invalid on the previous cycle. The second priority encoder used to remove entries via write operations from the Store Buffer points to the lowest numbered entry which was valid on the previous cycle.

The Store Buffer includes logic which detects if there are no free entries. Due to execution unit constraints, the pipeline must be frozen after the first cycle of a store instruction if the Store Buffer will not have room to accept this store. In order for the Store Buffer to stall the pipeline after the first cycle, the stall indication must be signaled before any store from the previous two instructions would be entered into the store buffer. The Store Buffer determines when it is full by detecting when all five entries are valid, any four entries are valid, and any three entries are valid. It also keeps track of whether the previous two instructions were stores. In addition, if the instruction before the previous instruction was a store, it also keeps track if a bypass occurred. For purposes of detecting the Store Buffer being full, if the instruction before the previous instruction was a store and caused a bypass, it is not counted as a store. Ideally, the previous instruction would be handled in a similar manner but its bypass status is not known early enough to permit this. The Store Buffer control (306) considers the Store Buffer (128) to be full if :
- all five numbered entries (304) are valid
or
- four numbered entries (304) are valid and one of the previous two instructions was a store
or
- three numbered entries (304) are valid and both of the previous instructions were stores.

If the Store Buffer control (306) thinks that the Store Buffer (128) is full and a new store instruction is started, the execution unit is signalled to stall for two cycles so that an entry can be written to the cache.

In this particular embodiment, the Store Buffer (128) is physically located on two integrated circuit chips due to specific system partitioning requirements not associated with the requirements of the Store Buffer. One chip contains the addresses and address comparators. The other chip contains the data. Both chips keep track of group indication (314, 316) and valid bits (318, 320). The only control communication (400) between the two halves of the Store Buffer on different chips are an indication of which instructions are leads and stores, the size of the store data, which instructions don't access cache, match lines (338) from the 6 address comparators (310), a hit indication, a group indication, a parity indication and a trap indication. Both the parity and trap indications are used to abort a store in progress, similar to a cache miss. The reason both chips keep track of group indications for each buffer entry is that neither chip keeps track of the full address for the entries. Since address comparison is only performed on cache addresses, not the full address, for a given address up to two entries may match. This is because there are, in this embodiment, two groups in the cache. The actual entry that matches is determined by examining the group of each matching entry and comparing it to the group of the current access. The invention, however, is not limited to splitting the store buffer into two halves, one on each integrated circuit chip.

This embodiment detects and corrects single bit cache errors and supports multi-processing. These features are supported by the Store Buffer.

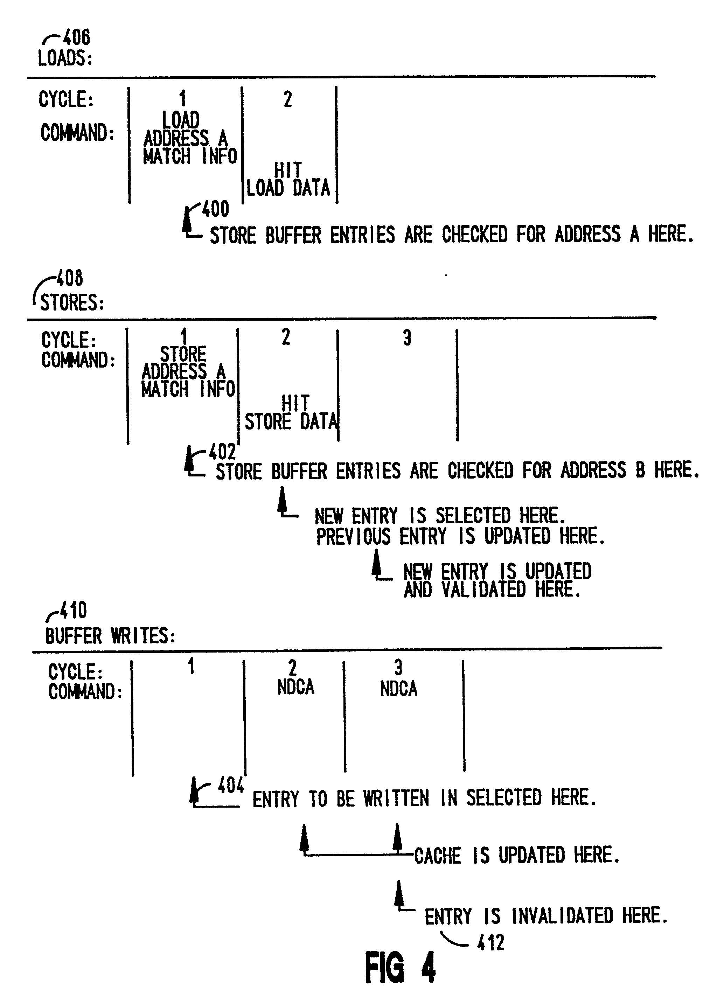

Figure 4 shows the sequence of events which occur for the three activities of the store buffer. Note that there are two types of addresses mentioned here. First there are the addresses the CPU generates by executing load and store commands. Secondly there are the cache addresses used to reference the cache. Generally speaking, a given cache address can correspond to more than one CPU address. Associated with cache addresses are cache groups. The group of CPU address A is determined by which cache group currently contains address A.

If the CPU executes a load command (406) to CPU address A, the following occurs : The data cache is checked to see if it contains the data at CPU address A. If not, this is a cache miss and the missing data will be transferred in from main memory and the load will be attempted again. If the cache does not contain the data for CPU address A, the six Store Buffer entries are checked (400) to see if they contain the data for CPU address A. A numbered Store Buffer entry contains the data for CPU address A if it is marked valid and its group is the same as that of CPU address A and its cache address matches that of CPU address A. The previous Store Buffer entry contains CPU address A if the prior command executed was a store and the group of the previous entry is the same as that of CPU address A and the cache address of the previous entry matches that of CPU address A. Four cases exist for the load :

Case 1 : No entry contains CPU address A. In this case, data is taken from the proper group of the cache and sent to the CPU.

Case 2 : The previous entry contains CPU address A. In this case, data is bypassed from the previous entry and sent to the CPU.

Case 3 : A numbered entry contains CPU address A. In this case, data is bypassed from that entry and sent to the CPU.

Case 4 : Both the previous entry and a numbered entry contains CPU address A. In this case, data is bypassed from the previous entry and sent to the CPU. This is because the contents of the previous entry are more recent that the contents of the numbered entry.

Loads have no other effect on the Store Buffer.

If the CPU executes a store command (408) to CPU address B, the following occurs : The data cache is checked to see if it contains the data at CPU address B. If not, this is a cache miss and the missing data will be transferred in from main memory and the store will be attempted again. If the cache does contain the data for CPU address B, the six Store Buffer entries are checked (402) to see if they contain the data for CPU address B. A numbered Store Buffer entry contains the data for CPU address B if it is marked valid and its group is the same as that of CPU address B and its cache address matches that of CPU address B. The previous Store Buffer entry contains CPU address B if the prior command executed was a store and the group of the previous entry is the same as that of CPU address B and the cache address of the previous entry matches that of CPU address B. Four cases exist for the store :

Case 1 : No entry contains CPU address B. In this case, data is taken from the proper group of the cache and used as input to the merge operation, described below.

Case 2 : The previous entry contains CPU address B. In this case, data is bypassed from the previous entry and used as input to the merge operation.

Case 3 : A numbered entry contains CPU address B. In this case, data is bypassed from that entry and used as input to the merge operation.

Case 4 : Both the previous entry and a numbered entry contains CPU address B. In this case, data is bypassed from the previous entry and used as input to the merge operation.

In each of these cases, the most up-to-date data for address B is obtained either directly from the cache or from a Store Buffer entry. The next step in a store is to merge this data with the data to be stored from the CPU. The result from this merge operation becomes the most up-to-date data for address B. This data, along with its group and cache address is placed into the previous entry of the Store Buffer on the cycle the CPU supplies the store data as referred to in Figure 3. Also at this time one of the invalid numbered Store Buffer entries is selected. On the following cycle, the data, group, and cache address is copied from the previous entry into the selected numbered entry. It is marked valid. There will always be at least one invalid entry when the store executes because if the Store Buffer is full, the CPU will stall and write out an entry (described below) before the store executes.

Whenever the CPU does not access the cache (by executing a load or store command) for two consecutive cycles, a Store Buffer entry is written back to cache if at least one is valid (410). The CPU generates a signal called NDCA (non data cache access), Figure 3, to indicate that it is not executing a command that requires the cache. If this signal is true for two consecutive states, the valid entry selected immediately prior to these two states is written to the cache and the entry is marked invalid (412). Only numbered Store Buffer entries are allowed to be written back in this manner. If the NDCA line only is true for one cycle, a "buffer write abort" case occurs. In this case, the Store Buffer remains unchanged and the cache is not updated.

The foregoing description of the invention has been presented for purposes of illustration and description. It is not intended to be exhaustive or to limit the invention to the precise form disclosed, and other modifications and variations are possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1.  A data cache buffer for a computer comprising :
       a processing means for executing commands and performing operations on data, having an input for receiving information and an output for sending information ;
       a buffer means having an input connected to the output of the processing means, the input for receiving information from the processing means, and for storing that information, and having an output ;
       a data cache means having an input connected to the buffer means, the input for receiving information from the buffer means, and for storing that information.

2.  The apparatus of claim 1 wherein the buffer means stores the information from the processor until the data cache means is accessible and the data cache means can receive and store the information without causing a stall in the processor.

3.  The apparatus of claim 2 wherein the buffer means further comprises :
       a data store means for storing data ;
       an address store means for storing the address location of the data.

4.  The apparatus of claim 3 wherein the buffer store means further comprises a entry, the entry comprising :
       a validity indicator means for providing an indication whether the data located at the entry is valid ;
       a data store means for storing data ;
       an address store means for storing an address corresponding to the data.

5.  The apparatus of claim 4 wherein the buffer store means is a two-way set associative and the entry further comprises a group indicator to indicate which data is being accesses by the processor means.

6.  The apparatus of claim 5 wherein the store buffer means comprises a plurality of entries.

7.  The apparatus of claim 2 wherein the data cache is a write-through data cache and the apparatus further comprises a main memory means for providing complete memory support to the data cache and processor.

8.  The apparatus of claim 2 wherein the data cache is a write-back data cache and the apparatus further comprises a main memory means for providing complete memory support to the data cache and processor.

9.  A data cache buffer for a computer comprising :
       a processor for executing loads and stores of information, the processor having an output ;
       a buffer having an input connected to the output of the processor, the buffer receiving information from the processor, the buffer having an output, stores the information from the processor;
       a data cache having an input connected to the output of the buffer, the data cache receives the information from the buffer.

10. A method for performing a store operation in an equivalent time it takes for performing a load operation, for a system having a processor, a data cache, a system bus, and a buffer, the method comprising the steps of :
       sending information from a processor to a buffer ;
       writing the buffer information to a data cache ;
       writing the data cache to a main memory at a subsequent predetermined time.

11. The method of claim 10, 11 further comprising the steps of :
       sending an address corresponding to information sought by the processor to the buffer;
       comparing the address sent to an address stored in the buffer ;
       determining whether a match occurs ;
       writing data into the buffer to be stored at the address in the buffer if a match occurs ;
       determining whether buffer has an open entry ;
       writing data at the open entry in the buffer if no match occurs.

12. The method of claim 10, 11 further comprising the steps of loading information into the buffer, the method comprising the steps of :
       comparing an address, sent by the processor in order to retrieve data corresponding to the address, to an address in the buffer ;
       determining whether a match occurs ;
       determining whether data is valid ;
       sending data corresponding to the address if a match occurs and data is valid.

**FIG 1**

CACHE ADDRESS

ADDRESS STORE BUFFER 116

DATA STORE BUFFER 114

120

122

128

118

124

126

CPU 100

110

CACHE DATA

DATA CACHE 112

BASIC DATA CACHE STORE BUFFER ORGANIZATION

FIG 2

EP 0 442 690 A2

FIG 3

```
┌─406
│LOADS:
├──────────────────────────────────────────────────────────────────
│  CYCLE:          │      1        │     2      │
│  COMMAND:        │    LOAD       │            │
│                  │  ADDRESS A    │            │
│                  │  MATCH INFO   │            │
│                  │               │    HIT     │
│                  │               │  LOAD DATA │
│                        ┌─400
│                        └─ STORE BUFFER ENTRIES ARE CHECKED FOR ADDRESS A HERE.
```

```
┌─408
│STORES:
├──────────────────────────────────────────────────────────────────
│  CYCLE:          │      1        │     2      │     3      │
│  COMMAND:        │    STORE      │            │            │
│                  │  ADDRESS A    │            │            │
│                  │  MATCH INFO   │            │            │
│                  │               │    HIT     │            │
│                  │               │ STORE DATA │            │
```

┌─402
└─ STORE BUFFER ENTRIES ARE CHECKED FOR ADDRESS B HERE.

   ▲
   └─ NEW ENTRY IS SELECTED HERE.
      PREVIOUS ENTRY IS UPDATED HERE.

        ▲
        └─ NEW ENTRY IS UPDATED
           AND VALIDATED HERE.

```
┌─410
│BUFFER WRITES:
├──────────────────────────────────────────────────────────────────
│  CYCLE:          │      1        │     2      │     3      │
│  COMMAND:        │               │   NDCA     │   NDCA     │
```

┌─404
└─ ENTRY TO BE WRITTEN IN SELECTED HERE.

       ▲         ▲
       └─────────┴─ CACHE IS UPDATED HERE.

            ▲
            └─ ENTRY IS INVALIDATED HERE.
               └─ 412

# FIG 4